# EUROPEAN PATENT APPLICATION

(11) **EP 4 651 462 A1**
(43) Date of publication of application: **19.11.2025**
(21) Application number: 24175574.3
(22) Date of filing: 14.05.2024
(51) Int. Cl.: H04L 61/5007, H04L 61/5038, H04L 41/0806, H04L 12/40

(54) **EFFICIENT ADDRESSING AND COMMISSIONING OF DETACHED I/O-MODULES**

(71) Applicant: Siemens Schweiz AG, 8047 Zürich (CH)
(72) Inventor: Kyburz, Beat, 8913 Ottenbach (CH); Camenzind, Oskar, 6422 Steinen (CH)
(74) Representative: Siemens Patent Attorneys

(57) **Abstract**

Method and arrangement for addressing and commissioning of detached I/O-Modules of devices of a Building Automation System connected by a Single Pair Ethernet (SPE) datalink, especially Multidrop Datalink, the Building Automation System comprising one or more Building Automation Controller.

## Description

### FIELD OF THE INVENTION

The present invention relates to a method and to an arrangement for addressing and commissioning of detached I/O-Modules of a Building Automation System connected by a Single Pair Ethernet (SPE) datalink.

### BACKGROUND OF INVENTION

I/O-Modules (input/output modules or I/O module devices) are devices interfacing with the physical world and used to integrate peripheral devices such as sensors and actuators into a Building Automation System. Multiple I/O-Modules can be connected to one Building Automation Controller via an I/O-Bus.

Each I/O Module needs an unambiguous I/O-Module-Address which is used by the Building Automation Controller to address the I/O-Module via the I/O-Bus.

So far, the I/O-Module-Address was configured by the installer via a pluggable address key. This addressing method is costly since an electromechanical address decoder was required per I/O-Module, and the installer had to bring along the right set of pluggable address keys. Spare address keys from the set are thrown away (waste).

With the currently used conventional bus communication technology all I/O-Modules were connected to the same physical wires (multi-drop) and Module addresses were configured with an electro-mechanical address key.

Known alternative solutions:
- The I/O-Module-Address can be configured via a commissioning tool, e.g., Mobile Phone and Mobile App. This procedure would require a connection such as Bluetooth, NFC, or USB between the I/O-Module and the commissioning tool. This solution requires extra hardware and makes the I/O-Module more expensive.
- The I/O-Module assignment can be based on pre-engineered serial number information, e.g. printed on the I/O-Module (e.g. QR-Code). The serial number can be collected during I/O-Module installation and transferred together which the recorded Module position to the engineering tool. This solution requires extra work for the installer.
- The I/O-Module-Address is automatically generated and stored in the terminal base of the I/O-Module. The electronics and firmware of the terminal base of the 1st I/O-Module, which is connected to the controller, starts automatically with I/O-Module-Address 1. The next I/O-Module in the row reads the I/O-Module-Address from the previous I/O-Module and internally adds 1 to get its address from 2 to N, etc.
- Discovered I/O-Modules could be manually assigned to the engineered logical I/O-Module via a commissioning tool by selecting the engineered I/O-Module via the commissioning tool and, e.g., pushing a button on the physical I/O-Module. Pushing a button on the I/O-Module will trigger a specific identification message to initiate the assignment of the physical I/O-Module to the engineered I/O-Module if the I/O-Module-Type matches. Afterward, the controller configures the I/O-Module-Address of the selected physical I/O-Module with a specific service. This solution requires a commissioning tool and extra user interaction by the commissioning engineer. In the case of I/O-Modules in a remote cabinet, even 2 persons may be required to do the job: one at the controller to operate the commissioning tool and one person at the I/O-Module to push the button.

These solutions are time-consuming and expensive, or not applicable to detached groups of I/O-Module-devices being connected by further Single Pair Ethernet datalinks to the I/O-Bus.

The objective of the invention is to provide an efficient mechanism for addressing and commissioning of detached I/O-Modules, for example, in the field of building automation, especially for multidrop data link networks.

### SUMMARY OF INVENTION

A first aspect of the invention is a method for addressing and commissioning of I/O-Modules (or I/O-Module-devices) of a Building Automation System,
wherein the Building Automation System comprises a Building Automation Controller;
wherein the Building Automation System comprises a first group of I/O-Module-devices being connected by a first Single Pair Ethernet datalink directly to the Building Automation Controller and to a first Branch-Connection-Module;
wherein respective further detached groups of I/O-Module-devices being connected in each case by a respective further Single Pair Ethernet datalink,
wherein the respective further detached groups of I/O-Module-devices have in each case a respective further Branch-Connection-Module,
wherein the respective further Branch-Connection-Modules are connected to the first Branch-Connection-Module or to a Branch-Connection-Module of one of the respective further Single Pair Ethernet datalinks;
wherein the Single Pair Ethernet datalinks are in each case multidrop networks, especially according to the 10BASE-T1S standard;
wherein the first Branch-Connection-Module and the further Branch-Connection-Modules are inter-connected by suitable IP data link connection (e.g. 100BASE-TX, 10BASE-T1L, WIFI);
wherein Building Automation Controller and the further Branch-Connection-Modules are in each case configured as line coordinators for their assigned respective Single Pair Ethernet datalink;
wherein each line coordinator is performing for its assigned respective Single Pair Ethernet datalink:
   (S1) discovering I/O-Modules on the respective Single Pair Ethernet datalink via node discovery and registration procedure;
   (S2) initiating a position measurement with each discovered I/O-Module on the respective Single Pair Ethernet datalink;
   (S3) assigning consecutive I/O-Module-Addresses to the respective I/O-Modules of the respective Single Pair Ethernet datalink according to the measured position of the respective I/O-Module;
wherein the Building Automation Controller is assigning a global datalink address to each discovered I/O-Module on the first Single Pair Ethernet datalink,
wherein each of the further Branch-Connection-Modules is assigning a global datalink address to each discovered I/O-Module of its respective further Single Pair Ethernet datalink.

A second aspect of the invention is an arrangement configured to perform the method for addressing and commissioning of detached I/O-Module-devices of a Building Automation System.

### BRIEF DESCRIPTION OF THE DRAWINGS

The above mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates exemplary I/O Bus network components,
- FIG 2: illustrates exemplary logical I/O-Bus module addressing,
- FIG 3: illustrates a first exemplary I/O-Bus topology in a control cabinet with multiple I/O-Bus segments, and I/O-Bus lines
- FIG 4: illustrates a second exemplary I/O-Bus topology,
- FIG 5: illustrates a third exemplary I/O-Bus topology,
- FIG 6: illustrates a fourth exemplary I/O-Bus topology,
- FIG 7: illustrates a fifth exemplary I/O-Bus topology,
- FIG 8: illustrates exemplary logical module addresses prior and after position measurement,
- FIG 9: illustrates exemplary lists of engineered and dis-covered I/O-Modules before position measurement,
- FIG 10: illustrates exemplary lists of engineered and dis-covered I/O-Modules after position measurement and assignment, and
- FIG 11: illustrates an exemplary flowchart of a method for addressing and commissioning of detached I/O-Mod-ule-devices of a Building Automation System con-nected by a Single Pair Ethernet (SPE) datalink.

### DETAILED DESCRIPTION OF THE DRAWINGS

I/O module stands for Input/Output module, which is a device (I/O module device) that acts as the interface bridge between a computer system such as a Building Automation Controller at one end and an I/O device or peripheral device, such as a printer, webcam, scanner, actuator, sensor, controller, gateway, edge device, etc.

Exemplary functions of an I/O module or I/O-module-device are: sensing, actuating, controlling, timing, processor communication, device communication, data buffering, error correction, error reporting.

### Multidrop Datalink Networks

Single Pair Ethernet (SPE) datalinks for a multidrop network, such as 10BASE-T1S, provide topology discovery and node position detection features. These features can automatically determine the position of an I/O-Module M1 - Mn on an I/O-Bus. Therefore, it is possible to configure the I/O-Module-Address automatically based on the topology discovery and communication node position detection. The Controller can initiate the discovery and position detection procedure, and the results are available either on the Controller C or on the I/O Modules M1 - Mn from where the Controller C can read those values for further processing.

If the I/O-Bus consists of multiple physical I/O-Bus Lines which are coupled via Branch-Connection-Modules, a I/O-Module-Address hierarchy must be introduced to address and differentiate I/O-Modules with the same Position on different physical 10BASE-T1S Lines.

The I/O-Module-Address hierarchy has the following exemplary structure: L.N,
- with L = logical I/O-Bus Segment Number, and
- with N = logical Module node address within the I/O-Bus Segment.

A 10BASE-T1S data link corresponds to a I/O bus segment with the respective logical segment number.

An I/O bus segment is defined by the cable connection between controller-DCC, DCC-DCC, DCC-BCM, BCM-DCC, BCM-last module etc. A segment number is introduced in the addressing, which refers to the entire 10BASE-T1S datalink: L = logical I/O-Bus Segment Number 0..n of the corresponding physical 10BASE-T1S Line. DCC stands for Daisy Chain Connector. BCM stands for Branch Connection Module.

### Exemplary commissioning procedure (steps) with a multidrop I/O-Bus (e.g. 10BASE-T1S) with multiple I/O-Bus Segments:

Procedure in the Controller cabinet, on the local I/O-Bus Line which is physically connected to the Controller:
A) The Building Automation Controller discovers I/O-Modules and their Position on the local I/O-Bus Line which is connected to the Controller.
B) The Building Automation Controller uses a predefined logical I/O-Bus Segment Number for the local I/O-Bus Segment, e.g. L = 0.
C) The Building Automation Controller assigns a consecutive I/O-Module node address N = 1..M to the discovered I/O-Modules on the local I/O-Bus Segment according to the measured distances, starting with I/O-Module node address N=1 for the I/O-Module which is closest to the Building Automation Controller.
   On another physical 10BASE-T1S Line, i.e. another logical I/O-Bus Segment in the controller cabinet, or in a detached cabinet.
D) The corresponding logical I/O-Bus Segment Number L must be manually configured.
   This can e.g. be done via the Branch-Connection-Module at commissioning time which distributes the logical I/O-Bus Segment Number L to all I/O-Modules which are physically connected to the 10BASE-T1S Line.
E) The Branch-Connection-Module gets automatically a reserved logical I/O-Module-Address, e.g. L.0
F) For detached I/O-Bus Segments the Building Automation Controller is able to discover all detached I/O-Modules with their Module Type, Serial-Number etc.

However, the Building Automation Controller is not able to execute the Module Position measurement on a detached 10BASE-T1S Line since the measurement requires direct connectivity to the physical 10BASE-T1S medium.

Therefore, the position measurement is delegated by the Controller to the Branch-Connection-Module which determines the Module Position according to the measured distance between the Module and Branch-Connection-Module.

For an unambiguous Position measurement the Branch-Connection-Module must be the first Module on the 10BASE-T1S Line.

After the Position measurement the Branch-Connection-Module determines and assigns the logical Module node address N to the Modules within the logical I/O-Bus Segment.

Alternatively, the position measurement can also be accomplished by suitable transit time measurement of signals.

Further procedure (steps) for all I/O-Bus segments:
G) The configured logical I/O-Module-Address L.N may also be used and mapped in addition to an IPv6 address of the Module: L = IPv6 subnet id, N = IPv6 node interface id within the subnet. The IPv6 routing prefix can be used as a grouping information of I/O-Module Islands that belong to the same Building Automation Controller.
H) The configured logical I/O-Module-Address L.N of the physical I/O-Module is used by the Building Automation Controller to automatically assign the physical I/O-Module to the engineered logical representation of the I/O-Module which is characterized by the matching logical I/O-Module-Address L.N
I) All discovered Modules can be visualized on the Controller or in a tool with its position in the corresponding I/O-Bus Segment and with the I/O-Module-Type, MAC Address, Serial-Number, ...., etc. and the assigned Module-Address L.N

### Advantages of this approach:

The I/O-Module-Address is simply given by the discovered Module position on the 10BASE-T1S Line and the derived logical Module node address within the I/O-Bus Segment which is also known at engineering time.

The concept is extended to cover multiple 10BASE-T1S Lines and logical I/O-Bus Segments and detached I/O Islands.

In case of wrongly placed I/O-Modules at installation time there is no need to reinstall and rewire the I/O-Modules. The position of the physical I/O-Module can be kept and the I/O-Module-Address of the engineered logical representation of the I/O-Module can be adapted via a commissioning tool to assign the Module.

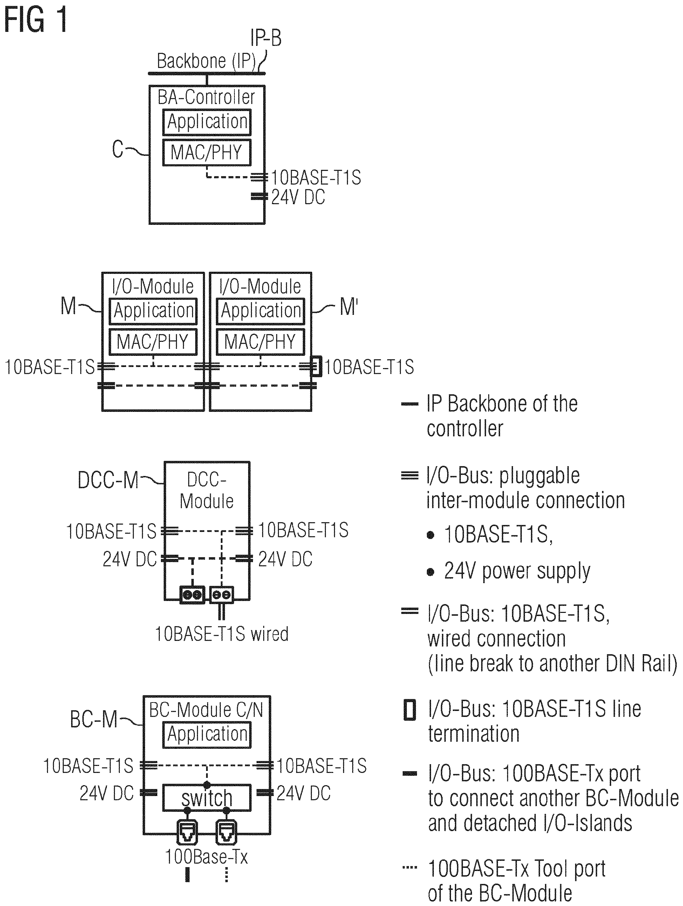

Figure 1 illustrates exemplary I/O Bus network components.

### Building Automation Controller C

- has a dedicated I/O-Bus connector (10BASE-T1S port and internal line terminator)
- discovers and manages all I/O-Modules M, M' of the I/O-subsystem
- integrates input and output channels of the I/O-Modules M, M'
- is connected to an IP Backbone network IP-B

The Controller C comprises suitable processing means, memory means, and interfaces to be connected to the I/O-Modules M, M' and to an IP backbone network IP-B. The IP backbone network IP-B is configured to connect different LANs or subnetworks in the same building, in different buildings, or in a campus environment.

### I/O-Module M, M'

- Integrated connector 10BASE-T1S connector and 24V power connector on both sides of the I/O-Module
- Line termination on the last I/O-Module
- Provides multiple input and output channels

### DCC-Module DCC-M

- Daisy Chain Connector Module that physically connects 10BASE-T1S and power supply wires with I/O-Modules
- Integrated 10BASE-T1S connector and 24V power connector on both sides on both sides of the DCC-Module
- Additional screw terminals for line break

### BC-Module BC-M

- Branch Connection Module BC-M is an 10BASE-T1S, 100BASE-Tx multiport or 10BASE-T1L network switch that connects detached I/O-Modules on a separate 10BASE-T1S line with the 10BASE-T1S line of the controller
- The Branch Connection Module BC-M supports exactly one 10BASE-T1S connection
- The Branch Connection Module BC-M will support at least one 100BASE-Tx port or 10BASE-T1L port to connect the next BC-Module(s)
- The Branch Connection Module BC-M may support one additional 100BASE-Tx port to connect a commissioning tool

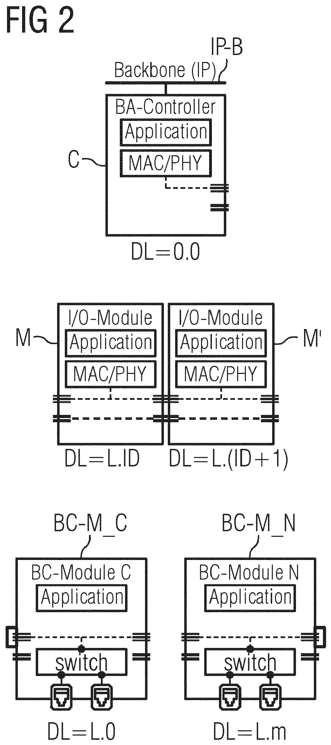

Figure 2 illustrates exemplary logical I/O-Bus module addressing.

### Logical I/O-Module-Address DL

- DL is used by the Building Automation Controller to address the I/O-Module, BC-Module logically in the engineering and runtime system, independent of IPv6 addresses which may change at runtime
- In the runtime system DL is mapped by the firmware of the Controller to the respective IPv6 address of the Module
- Address format: DL = L.ID
   o L = logical I/O-Bus Segment Number 0..n of the corresponding physical 10BASE-T1S Line
   o ID = ID indicates the Module position sequence per I/O-Bus Segment
      ID also defines the PLCA node-ID = 0..m to implement the 10BASE-T1S **P**hysical **L**ayer **C**ollision **A**voidance (PLCA) mechanism
- DL identifies the engineered representation of the I/O-Module and BC-Module by the Controller
- DL of the physical I/O-Module is automatically configured by the Controller C during commissioning:
   o I/O-Module assignment based on the discovered network topology and Position of the I/O-Module which must match with the engineered Module-Address L.N
- Alternative solutions:
   o Automatic I/O-Module assignment based on pre-engineered Serial-Number of the I/O-Module
   o Or manual device assignment of the physical Module to the engineered representation of the Module in the Controller C using a commissioning tool

### Building Automation Controller C:

- L = 0 (reserved for the 10BASE-T1S Line which is directly connected to the Controller)
- ID = 0 (Controller is first node on the 10BASE-T1S Line and the PLCA coordinator)

BC-Module: in the runtime system the BC-Module can be the 10BASE-T1S Line PLCA Coordinator (C) or Node (N)

| | |
|---|---|
| • L = 0 | for BC-Module on Line 0 which is directly connected to the Controller |
| • L = 1..n | for BC-Module in detached I/0-Island |
| • ID = 0 | for BC-Module which is the 1st Module on the detached 10BASE-T1S Line and the PLCA Coordinator |
| • ID = L.m | for BC-Module which is only PLCA Node on a 10BASE-T1S Line to make the connection to the next Line |

Advantageously a suitable commissioning tool is connected to the IP backbone network to communicate to the Controller.

An I/O-Module comprises:
- A respective I/O-Module-Address, which is assigned during commissioning.
- A respective node ID or serial number SN, e.g. MAC address, which is factory defined.
- A respective I/O-Module Type, which is factory defined.
- A respective Module Position, which is determined or measured during commissioning.

Typically, the I/O-Modules are mounted side by side in a consecutive sequence on one or more DIN-Rails in a control cabinet. Within a DIN-Rail the I/O-Modules are connected by means of a pluggable inter-module connection for Single Pair Ethernet.

By means of suitable inter-module connectors the I/O-Modules of different DIN-Rails are connected. The inter-module connectors provide the connection of a pluggable inter-module connection to a Single Pair Ethernet wired connection, e.g. in case of line breaks, sub islands.

Advantageously the inter-module connectors are plug-in connectors, typically passive devices with no electronics.

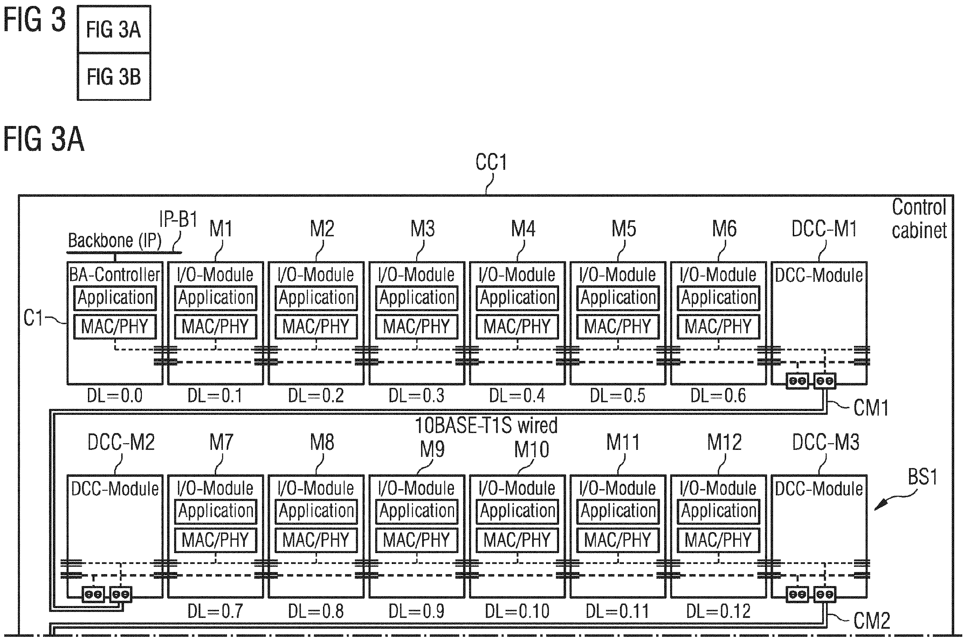

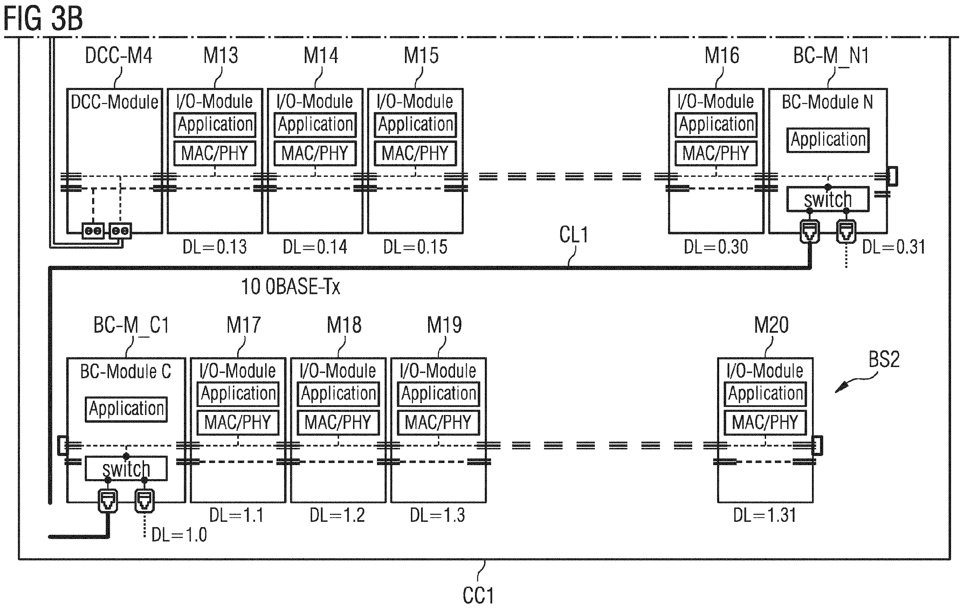

Figure 3 illustrates a first exemplary I/O-Bus topology in a control cabinet CC1 with I/O-Bus segments BS1 and BS2. The control cabinet CC1 comprises a controller C1. The controller C1 is connected to an IP Backbone IP-B1. The first I/O-Bus segment BS1 of the I/O-Bus topology is directly connected to the controller C1 and comprises a first quantity of I/O-Modules M1 - M6 (with the respective Logical Addresses DL 0.1 to DL 0.6). The first quantity of I/O-Modules M1 - M6 is connected via the Daisy Chain Connector Modules DCC-M1 and DCC-M2 to a second quantity of I/O-Modules M7 - M12 (with the respective Logical Addresses DL 0.7 to DL 0.12). The Daisy Chain Connector Modules DCC-M1 and DCC-M2 are connected by a suitable Connection Module CM1 (e.g. a plug connection or a wired connection). The second quantity of I/O-Modules M7 - M12 is connected via the Daisy Chain Connector Modules DCC-M3 and DCC-M4 to a third quantity of I/O-Modules M13 - M16 (with the respective exemplary Logical Addresses DL 0.13 to DL 0.30). The Daisy Chain Connector Modules DCC-M3 and DCC-M4 are connected by a suitable Connection Module CM2. The end element of bus segment BS1 is the Branch Connection Module BC-M_N1. The start element of bus segment BS2 is the Branch Connection Module BC-M_C1. The end element of bus segment BS2 is the exemplary I/O-Module M20. The bus segment BS2 comprises the I/O-Modules M17 - M20 (with the respective exemplary Logical Addresses DL 1.0 to DL 1.31).

The I/O-Modules of each bus segment are in each case connected among each other via a respective Single Pair Ethernet datalink.

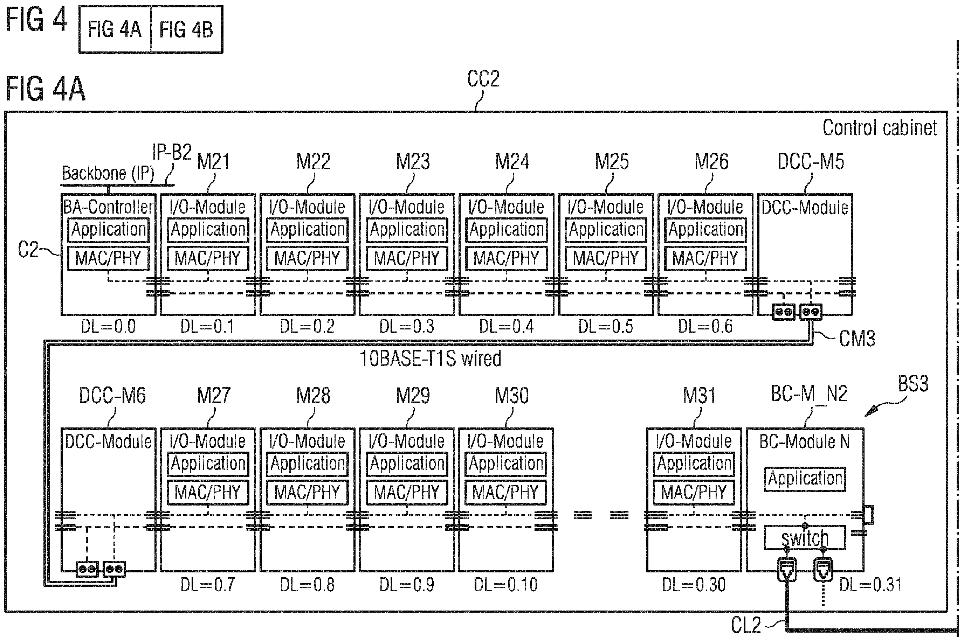

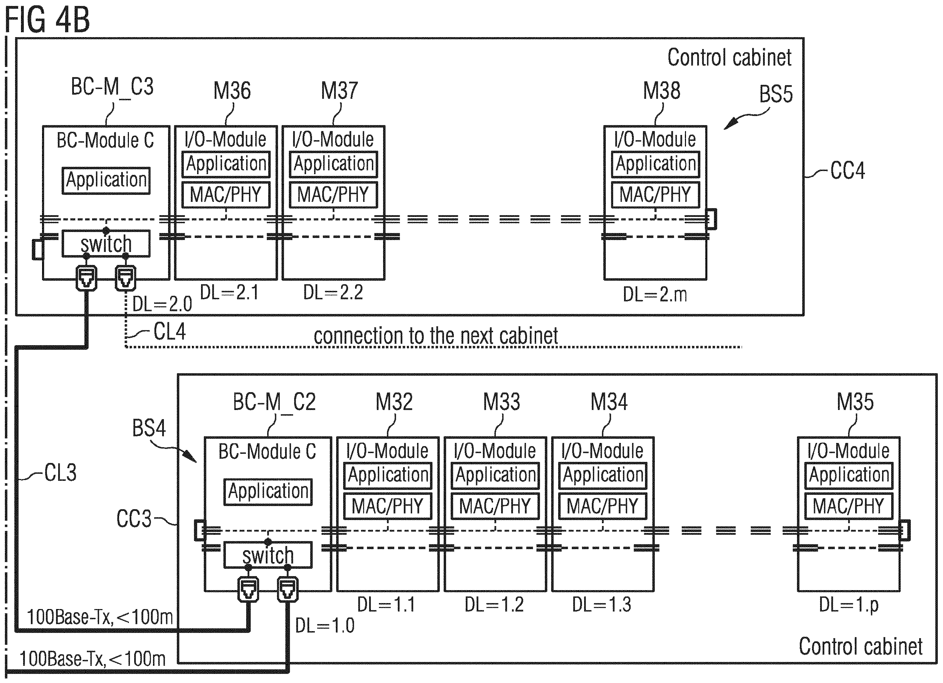

Figure 4 illustrates a second exemplary I/O-Bus topology showing a first variant of a daisy chain topology. The control cabinet CC2 is the starting point of the daisy chain.

The control cabinet CC2 comprises a controller C2. The controller C2 is connected to an IP Backbone IP-B2. The control cabinet CC2 comprises the bus segment BS3.

The I/O-Bus segment BS3 is directly connected to the controller C2 and comprises a first quantity of I/O-Modules M21 to M26 (with the respective Logical Addresses DL 0.1 to DL 0.6).

The first quantity of I/O-Modules M21 - M26 is connected via the Daisy Chain Connector Modules DCC-M5 and DCC-M6 to a second quantity of I/O-Modules M27 - M31 (with the respective Logical Addresses DL 0.7 to DL 0.30). The Daisy Chain Connector Modules DCC-M5 and DCC-M6 are connected by a suitable Connection Module CM3. The end element of bus segment BS3 is the Branch Connection Module BC-M_N2.

The control cabinet CC3 is the second element of the daisy chain and comprises the bus segment BS4. The start element of bus segment BS4 is the Branch Connection Module BC-M_C2 (address DL = 1.0). The end element of bus segment BS4 is the I/O-Module M35 (address DL = 1.p). The bus segment BS4 further comprises the I/O-Modules M32 - M34 (with the respective Logical Addresses DL 1.1 to DL 1.3). The bus segment BS4 is connected to the bus segment BS3 via the Connection Link CL2 (e.g. a wired 100BASE-Tx connection link).

The control cabinet CC4 is the third and last element of the exemplary daisy chain as illustrated in figure 4 and comprises the bus segment BS5. The start element of bus segment BS5 is the Branch Connection Module BC-M_C3 (address DL = 2.0). The end element of bus segment BS8 is the I/O-Module M38 (address DL = 2.m). The bus segment BS5 further comprises the I/O-Modules M36 - M37 (with the respective Logical Addresses DL 2.1 to DL 2.2). The bus segment BS5 is connected to the bus segment BS4 via the Connection Link CL3 (e.g. a wired 100BASE-Tx connection link).

In the exemplary illustration according to figure 4 the control cabinets CC3 and CC4 correspond to detached I/O islands.

The Branch Connection Module BC-M_C3 of control cabinet CC4 can be connected via the Connection Link CL4 with a further detached I/O island, as a further element of the daisy chain.

The I/O-Modules of each bus segment are in each case connected among each other via a respective Single Pair Ethernet datalink.

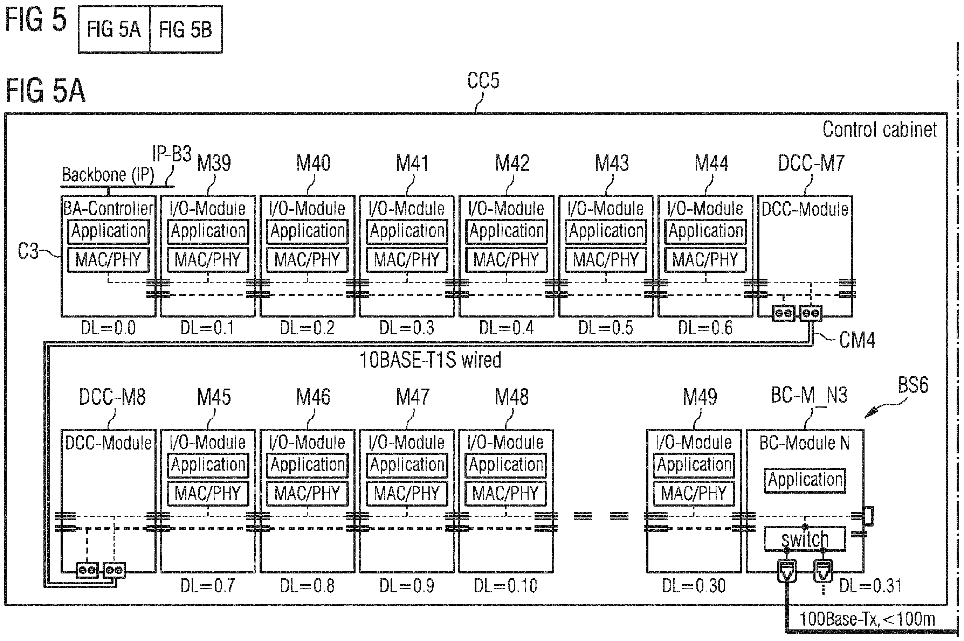

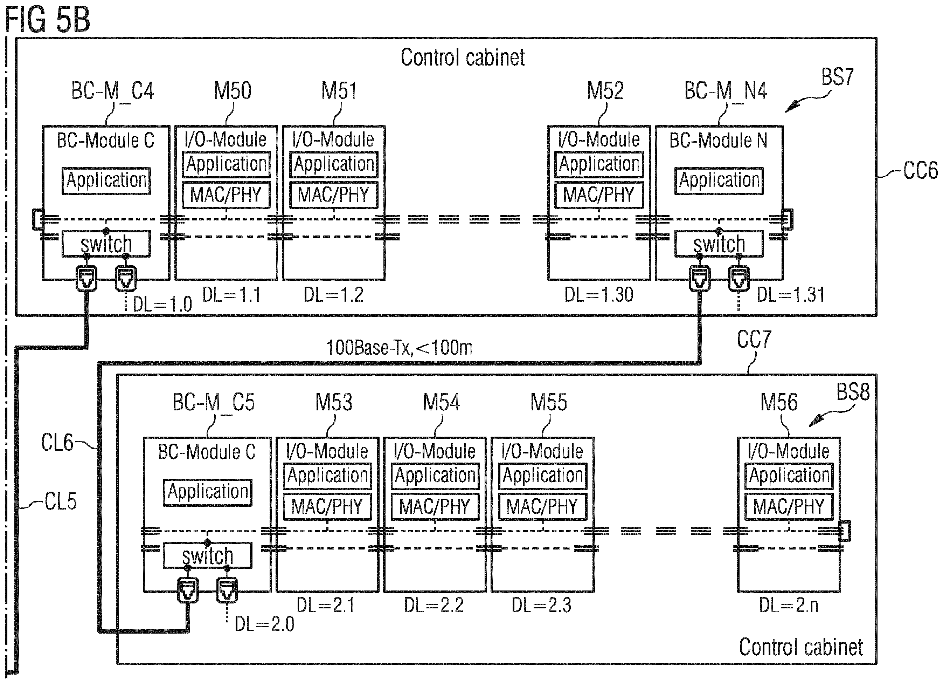

Figure 5 illustrates a third exemplary I/O-Bus topology showing a second variant of a daisy chain topology.

The control cabinet CC5 is the starting point of the daisy chain. The control cabinet CC5 comprises a controller C3. The controller C3 is connected to an IP Backbone IP-B3. The control cabinet CC5 comprises the bus segment BS6. The I/O-Bus segment BS6 is directly connected to the controller C3 and comprises a first quantity of I/O-Modules M39 to M44 (with the respective Logical Addresses DL 0.1 to DL 0.6). The first quantity of I/O-Modules M39 to M44 is connected via the Daisy Chain Connector Modules DCC-M7 and DCC-M8 to a second quantity of I/O-Modules M45 - M49 (with the respective Logical Addresses DL 0.7 to DL 0.30). The Daisy Chain Connector Modules DCC-M7 and DCC-M8 are connected by a suitable Connection Module CM4. The end element of bus segment BS6 is the Branch Connection Module BC-M_N3.

The control cabinet CC6 is the second element of the daisy chain and comprises the bus segment BS7. The start element of bus segment BS7 is the Branch Connection Module BC-M_C4 (address DL = 1.0). The end element of bus segment BS7 is the Branch Connection Module BC-M_N4 (address DL = 1.31). The bus segment BS7 further comprises the I/O-Modules M50 - M52 (with the respective Logical Addresses DL 1.1 to DL 1.30). The bus segment BS7 is connected to the bus segment BS6 via the Connection Link CL5 (e.g. a wired 100BASE-Tx connection link).

The control cabinet CC7 is the third and last element of the exemplary daisy chain as illustrated in figure 5 and comprises the bus segment BS8. The start element of bus segment BS8 is the Branch Connection Module BC-M_C5 (address DL = 2.0). The end element of bus segment BS8 is the I/O-Module M56 (address DL = 2.n). The bus segment BS12 further comprises the I/O-Modules M53 - M56 (with the respective Logical Addresses DL 2.1 to DL 2.3). The bus segment BS8 is connected to the bus segment BS7 via the Connection Link CL6 (e.g. a wired 100BASE-Tx connection link).

The I/O-Modules of each bus segment are in each case connected among each other via a respective Single Pair Ethernet datalink.

In the exemplary illustration according to figure 5 the control cabinets CC6 and CC7 correspond to detached I/O islands.

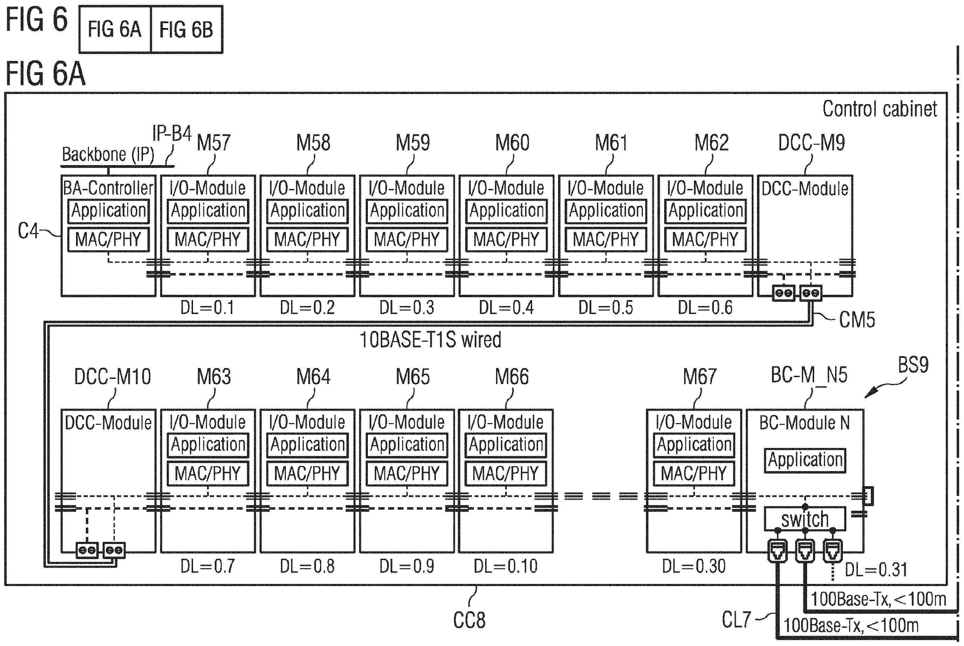

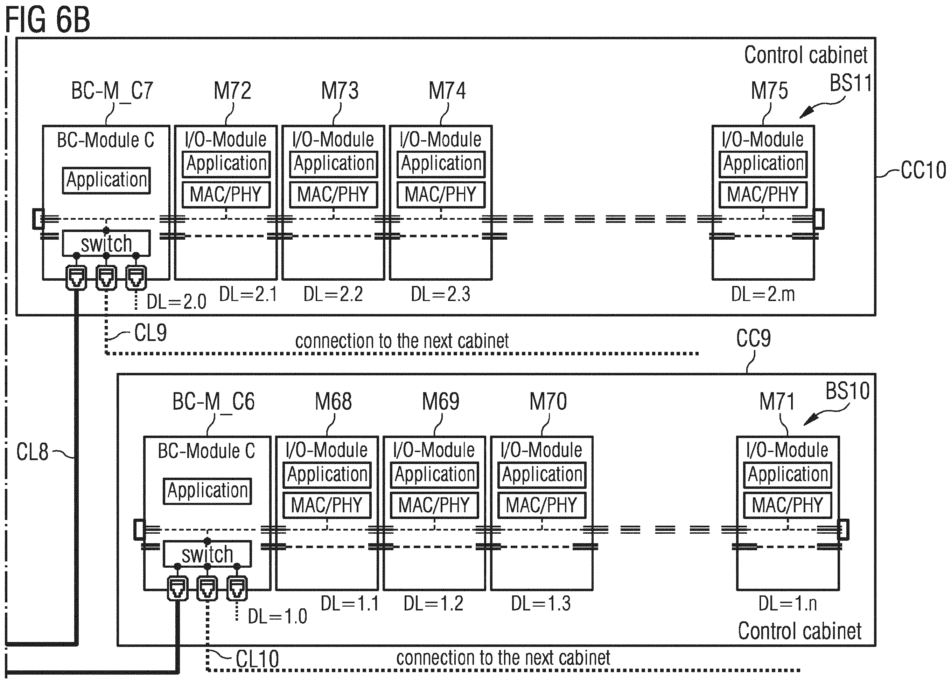

Figure 6 illustrates a fourth exemplary I/O-Bus topology, showing multiple control cabinets CC8 - CC10 in tree topology. The control cabinet CC8 is the root of the tree topology as illustrated in figure 6.

The control cabinet CC8 comprises a controller C4. The controller C4 is connected to an IP Backbone IP-B4. The control cabinet CC8 comprises the bus segment BS9. The I/O-Bus segment BS9 is directly connected to the controller C4 and comprises a first quantity of I/O-Modules M57 to M62 (with the respective Logical Addresses DL 0.1 to DL 0.6). The first quantity of I/O-Modules M57 to M62 is connected via the Daisy Chain Connector Modules DCC-M9 and DCC-M10 to a second quantity of I/O-Modules M63 - M67 (with the respective Logical Addresses DL 0.7 to DL 0.30). The Daisy Chain Connector Modules DCC-M9 and DCC-M10 are connected by a suitable Connection Module CM5. The end element of bus segment BS9 is the Branch Connection Module BC-M_N5. The Branch Connection Module BC-M_N5 has the exemplary Logical Addresses DL 0.31. The bus segment BS9is connected to the bus segment BS10 via the Connection Link CL7 (e.g. a wired 100BASE-Tx connection link).

The control cabinet CC9 comprising the bus segment BS10 illustrates the first branch of the exemplary tree topology as shown in figure 6. The start element of bus segment BS10 is the Branch Connection Module BC-M_C6 (address DL = 1.0). The end element of bus segment BS10 is the I/O-Module M71 (address DL = 1.n). The bus segment BS10 further comprises the I/O-Modules M68 - M70 (with the respective Logical Addresses DL 1.1 to DL 1.3). The bus segment BS10 is connected to the bus segment BS9 via the Connection Link CL7 (e.g. a 100BASE-Tx connection link).

The control cabinet CC10 comprising the bus segment BS11 illustrates the second branch of the exemplary tree topology as shown in figure 6. The start element of bus segment BS11 is the Branch Connection Module BC-M_C7 (address DL = 2.0). The end element of bus segment BS11 is the I/O-Module M75 (address DL = 2.m). The bus segment BS11 further comprises the I/O-Modules M72 - M74 (with the respective Logical Addresses DL 2.1 to DL 2.3). The bus segment BS11 is connected to the bus segment BS9 via the Connection Link CL8 (e.g. a 100BASE-Tx connection link).

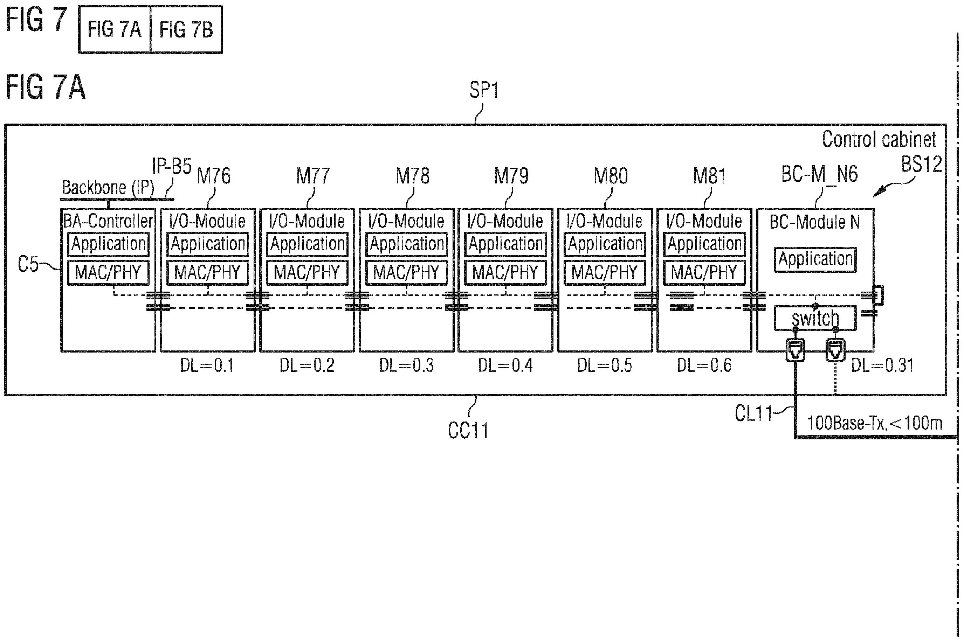

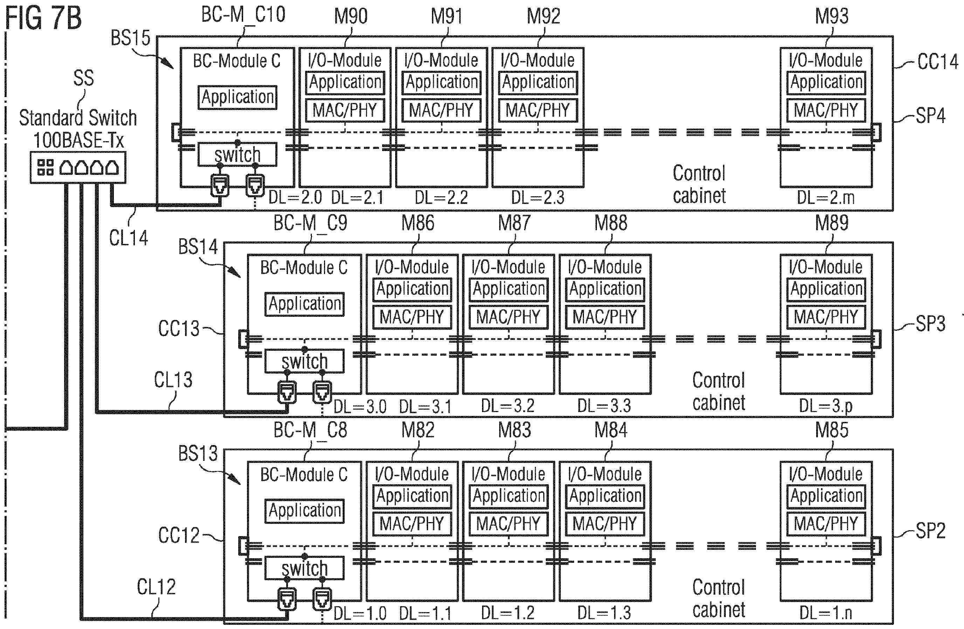

Figure 7 illustrates a fifth exemplary I/O-Bus topology, showing multiple control cabinets CC11 - CC14 (comprising respective bus segments BS12 - BS15 in star topology. The Standard Switch SS (e.g. 100BASE-Tx) acts as hub (central connection point) of the exemplary star topology as illustrated in figure 7.

The first spoke SP1 of the exemplary I/O-Bus topology is the control cabinet CC11. The control cabinet CC11 comprises a controller C5. The controller C5 is connected to an IP Backbone IP-B5. The control cabinet CC11 comprises the bus segment BS12. The I/O-Bus segment BS12 is directly connected to the controller C5 and comprises the I/O-Modules M76 to M81 (with the respective Logical Addresses DL 0.1 to DL 0.6) and the Branch Connection Module BC-M_N6 as end element. The Branch Connection Module BC-M_N6 has the Logical Addresses DL=0.31. The start element of bus segment BS12 is the controller C5 itself. The bus segment BS12 is connected to the Standard Switch SS (Hub, connection point of the star topology network) via the Connection Link CL11 (e.g. a 100BASE-Tx connection link).

The second spoke SP2 of the exemplary I/O-Bus topology is the control cabinet CC12. The control cabinet CC12 comprises the bus segment BS13. The I/O-Bus segment BS13 comprises the I/O-Modules M82 to M85 (with the respective Logical Addresses DL 1.1 to DL 1.n). The start element of bus segment BS13 is the Branch Connection Module BC-M_C8 (with the respective Logical Addresses DL=1.0). The end element of bus segment BS13 is the I/O-Module M85 (with the respective Logical Addresses DL 1.n). The bus segment BS13 is connected to the Standard Switch SS (Hub, connection point of the star topology network) via the Connection Link CL12.

The third spoke SP3 of the exemplary I/O-Bus topology is the control cabinet CC13. The control cabinet CC13 comprises the bus segment BS14. The I/O-Bus segment BS14 comprises the I/O-Modules M86 to M89 (with the respective Logical Addresses DL 3.1 to DL 3.p). The start element of bus segment BS14 is the Branch Connection Module BC-M_C9 (with the respective Logical Addresses DL=3.0). The end element of bus segment BS14 is the I/O-Module M89 (with the respective Logical Addresses DL 3.p). The bus segment BS14 is connected to the Standard Switch SS (Hub, connection point of the star topology network) via the Connection Link CL13.

The fourth spoke SP4 of the exemplary I/O-Bus topology is the control cabinet CC14. The control cabinet CC14 comprises the bus segment BS15. The I/O-Bus segment BS15 comprises the I/O-Modules M90 to M93 (with the respective Logical Addresses DL 2.1 to DL 2.m). The start element of bus segment BS15 is the Branch Connection Module BC-M_C10 (with the respective Logical Addresses DL=2.0). The end element of bus segment BS15 is the I/O-Module M93 (with the respective Logical Addresses DL 2.m). The bus segment BS15 is connected to the Standard Switch SS (Hub, connection point of the star topology network) via the Connection Link CL14.

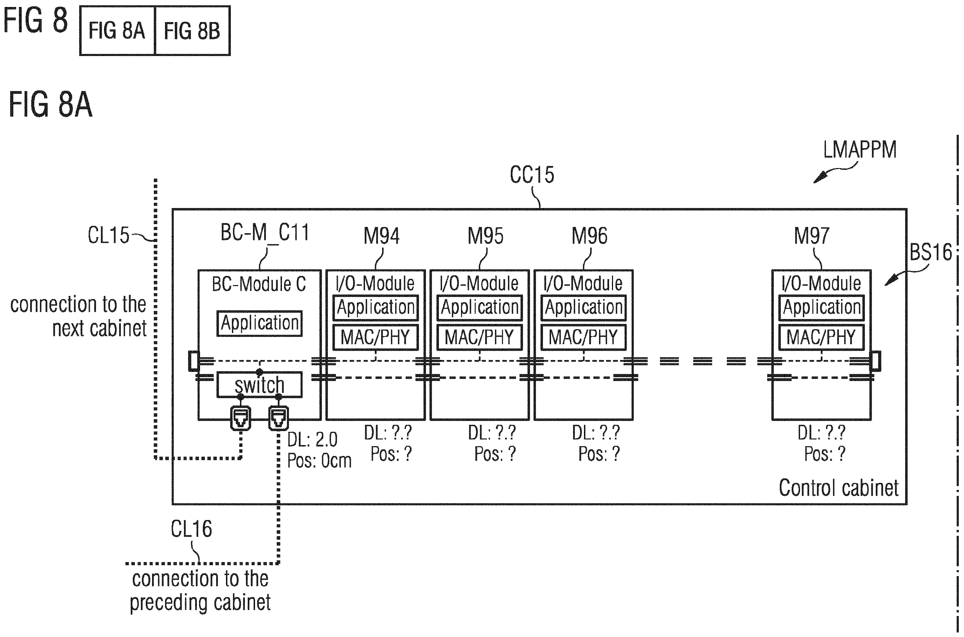

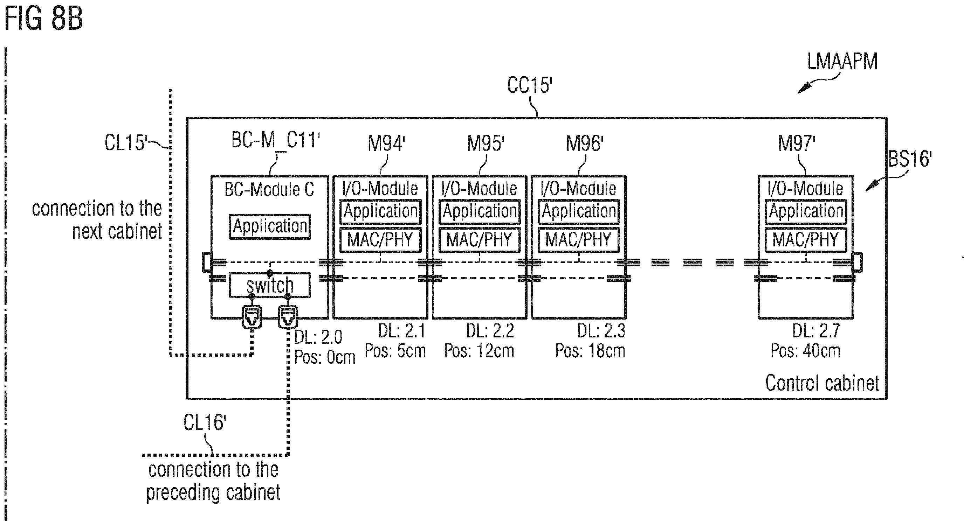

Figure 8 illustrates an exemplary scenario for logical module address assignment for an exemplary control cabinet CC15, CC15' prior (LMAPPM) and after (LMAAPM) position measurement.

Figure 8 shows on the left-hand side the logical module address assignment (LMAPPM) of control cabinet CC15 prior position measurement. The control cabinet CC15 comprises the bus segment BS16. The I/O-Bus segment BS16 comprises the I/O-Modules M94 to M97 (so far there are no Logical Addresses assigned to the I/O-Modules M94 to M97). The start element of bus segment BS16 is the Branch Connection Module BC-M_C11 (with the respective Logical Addresses DL=2.0). The position of the Branch Connection Module BC-M_C11 in the control cabinet CC15 is Pos: 0cm. The end element of bus segment BS21 is the I/O-Module M97. Prior position measurement of the I/O-Modules M94 to M97 the positions of the I/O-Modules M94 to M97 are not known. The position of the respective I/O-Module is determined by the distance of the respective I/O-Module from the Branch Connection Module BC-M_C11. The bus segment BS16 is optionally connected via the Connection Links CL15, CL16 to further detached I/O-Module-Islands (further detached control cabinets).

Figure 8 shows on the right-hand side the logical module address assignment (LMAAPM) of control cabinet CC15 after position measurement. After position measurement the control cabinet is labeled CC15', the I/O-Bus segment is labeled BS16', the I/O-Modules are labeled M94' to M97', the Branch Connection Module is labeled BC-M_C11', and the Connection Links are labeled CL15', CL16'.

After position measurement the position of the Branch Connection Module BC-M_C11' in the control cabinet CC15' remains Pos: 0cm, with address DL=2.0. After position measurement the positions Pos (means the distances on the DIN-rail of control cabinet CC15' from the Branch Connection Module BC-M_C11') are known for the I/O-Modules M94' to M97'. According to the respective positions Pos the logical address of the I/O-Modules M94' to M97' are determined.
I/O-Module M94' has the position Pos: 5cm and the logical address DL: 2.1.
I/O-Module M95' has the position Pos: 12cm and the logical address DL: 2.2.
I/O-Module M96' has the position Pos: 18cm and the logical address DL: 2.3.
I/O-Module M97' has the position Pos: 40cm and the logical address DL: 2.7.

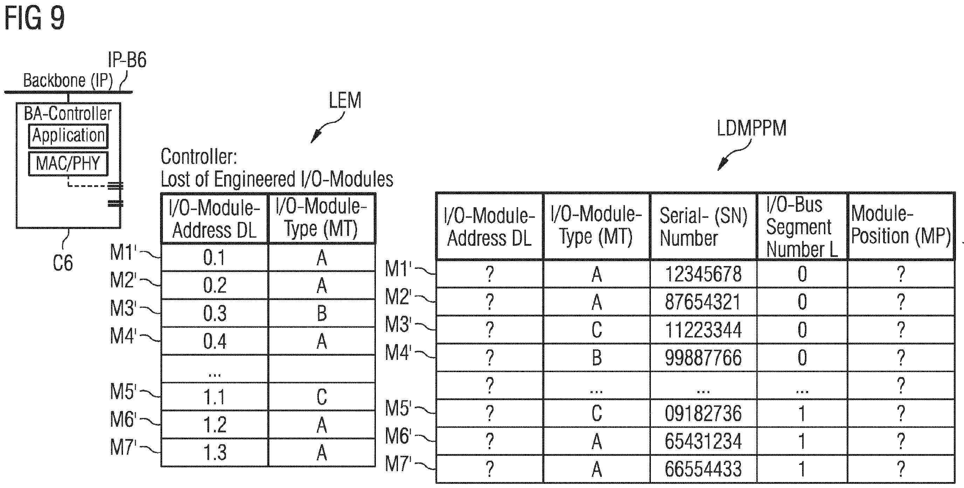

Figure 9 illustrates exemplary lists of engineered I/O-Modules (LEM) and of discovered I/O-Modules prior to position measurement (LDMPPM). The lists LEM, LDMPPM are generated and hosted by the controller C6. The controller C6 is connected to the IP Backbone IP-B6. The IP backbone network IP-B6 is configured to connect different LANs or subnetworks in the same building, in different buildings, or in a campus environment.

In figure 9 the exemplary lists LEM, LDMPPM are represented as tables. The table LEM comprises two columns with the headers I/O-Module-Address (DL) and I/O-Module-Type (MT). The lines below the headers represent exemplary I/O-Modules M1' - M7'. The table LDMPPM comprises five columns with the headers I/O-Module-Address (DL), I/O-Module-Type (MT), Serial-Number (SN), I/O-Bus Segment Number (L), and Module-Position (MP). The lines below the headers represent exemplary I/O-Modules M1' - M7'.

In case the Single Pair Ethernet (SPE) datalink is a multi-drop network or a multidrop I/O-Bus, for instance according to IEEE Standard 10BASE-T1S the Building Automation Controller C discovers I/O-Modules M1' - M7' on the I/O-Bus via node discovery and registration procedure. After the discovery is completed a list of I/O-Modules M1' - M7' with their respective Serial-Number (SN) is known. At this point, the Building Automation Controller C6 knows the I/O-Modules M1' - M7' on the I/O-Bus but not the position of the respective I/O-Modules M1' - M7'.

In figure 9 the list (table) LEM illustrates the list of engineered exemplary I/O-Modules M1' - M7' and the list (table) LDMPPM illustrates the list of discovered exemplary I/O-Modules M1' - M7' prior to position measurement.

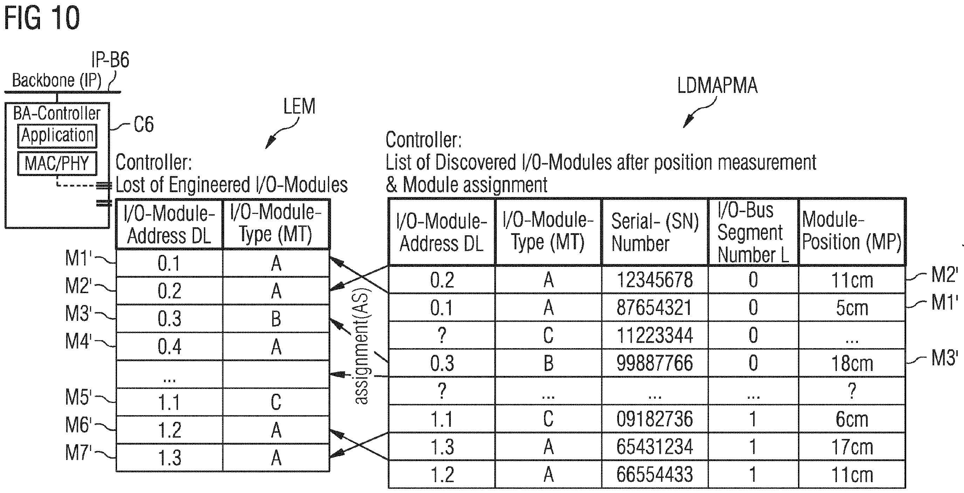

Figure 10 illustrates exemplary lists of engineered I/O-Modules (LEM) and of discovered I/O-Modules after position measurement and assignment (LDMAPMA). The lists LEM, LDMAPMA are generated and hosted by the controller C6. The controller C6 is connected to the IP Backbone IP-B6.

In figure 10 the exemplary lists LEM, LDMAPMA are represented as tables. The table LEM comprises two columns with the headers I/O-Module-Address (DL) and I/O-Module-Type (MT). The lines below the headers represent exemplary I/O-Modules M1' - M7'.

The table LDMAPMA comprises five columns with the headers I/O-Module-Address (DL), I/O-Module-Type (MT), Serial-Number (SN), I/O-Bus Segment Number (L), and Module-Position (MP). The lines below the headers represent exemplary I/O-Modules M1' - M7'.

In case the Single Pair Ethernet (SPE) datalink is a multi-drop network or a multidrop I/O-Bus, for instance according to IEEE Standard 10BASE-T1S the Building Automation Controller C6 initiates a position measurement with each discovered I/O-Module M1' - M7' on the same I/O-Bus line. The PHY (Physical-Layer-Transceiver) of the Building Automation Controller C6 will send a specific signal to the PHY of the respective I/O-Module M1' - M7' which is addressed by the respective Serial Number SN to trigger the position measurement between the Controller C6 and the I/O-Module M1' - M7'. Afterward, the measured propagation delay can be queried from the PHY of the I/O-Module via the Serial Number SN. The propagation delay can be mapped to a cable distance on the I/O-Bus (e.g. 10BASE-T1S network). Even if the measured position has only an accuracy of < 5 cm it is possible to determine the sequence of the I/O-Modules M1' - M7' on an I/O-Bus. The Building Automation Controller C6 is configured to assign AS a consecutive I/O-Module-Address DL to the I/O-Modules M1' - M7' according to the measured distances, starting with I/O-Module-Address 0.1 for the I/O-Module M1' which is closest to the Building Automation Controller C6.

In figure 10 the list LEM illustrates the list of engineered I/O-Modules M1' - M7' and the list LDMAPMA illustrates the list of discovered I/O-Modules M1' - M7' after position measurement and assignment AS. The arrows indicate the respective assignment AS.

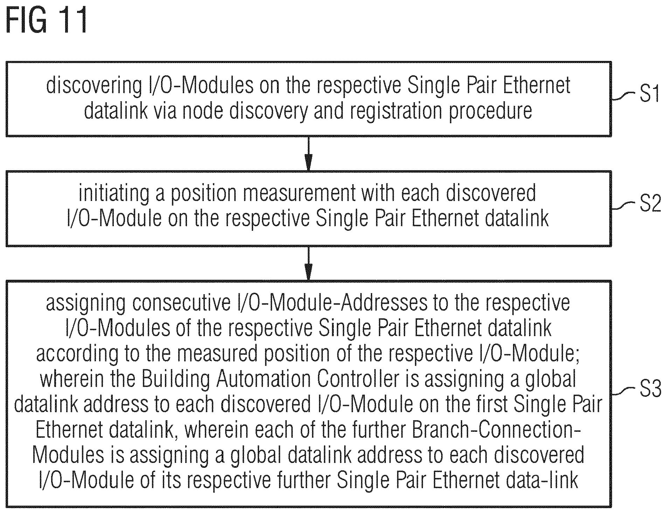

Figure 11 illustrates an exemplary flowchart of a method for addressing and commissioning of detached I/O-Module-devices of a Building Automation System connected by a Single Pair Ethernet (SPE) datalink,
wherein the Building Automation System comprises a Building Automation Controller;
wherein the Building Automation System comprises a first group of I/O-Module-devices being connected by a first Single Pair Ethernet datalink to the Building Automation Controller and to a first Branch-Connection-Module;
wherein respective further detached groups of I/O-Module-devices being connected in each case by a respective further Single Pair Ethernet datalink,
wherein the respective further detached groups of I/O-Module-devices have in each case a respective further Branch-Connection-Module,
wherein the respective further Branch-Connection-Modules are connected to the first Branch-Connection-Module or to a Branch-Connection-Module of one of the respective further Single Pair Ethernet datalinks;
wherein the Single Pair Ethernet datalinks are in each case multidrop networks, especially according to the 10BASE-T1S standard;
wherein the first Branch-Connection-Module and the further Branch-Connection-Modules (BC) are inter-connected by suitable IP data link connection (e.g. 100BASE-TX, 10BASE-T1L, WIFI);
wherein Building Automation Controller and the further Branch-Connection-Modules are in each case configured as line coordinators for their assigned respective Single Pair Ethernet datalink;
wherein each line coordinator is performing for its assigned respective Single Pair Ethernet datalink:
   (S1) discovering I/O-Modules on the respective Single Pair Ethernet datalink via node discovery and registration procedure;
   (S2) initiating a position measurement with each discovered I/O-Module on the respective Single Pair Ethernet datalink;
   (S3) assigning consecutive I/O-Module-Addresses to the respective I/O-Modules of the respective Single Pair Ethernet datalink according to the measured position of the respective I/O-Module;
wherein the Building Automation Controller is assigning a global datalink address to each discovered I/O-Module on the first Single Pair Ethernet datalink,
wherein each of the further Branch-Connection-Modules is assigning a global datalink address to each discovered I/O-Module of its respective further Single Pair Ethernet datalink.

Advantageously the assigning of a global datalink address is performed according to the Single Pair Ethernet Network Topology starting with the first Single Pair Ethernet datalink.

Advantageously the global datalink address is assigned by the Building Automation Controller to the Branch Connection Module during commissioning.

Advantageously the global datalink address is assigned by a commissioning tool (e.g. ABT Go, ABT site) to the respective Branch-Connection-Module during commissioning.

Advantageously the global datalink address is assigned by a local user (display, push buttons) interface of the respective Branch-Connection-Module during commissioning.

Advantageously the global datalink address is assigned by a web server of the respective Branch-Connection-Module during commissioning.

Advantageously the accuracy of the position measurement is < ½ of the width of an I/O-Module to determine the sequence of the I/O-Modules on the respective Single Pair Ethernet datalink.

Advantageously the assigned I/O-Module-Addresses are be used and mapped to an IPv6 address of the respective Module.

Advantageously the I/O-Modules are visualized on the Controller and/or in a tool by suitable output means.

Advantageously the I/O-Modules are visualized on the Controller and/or in a tool with its position on a DIN Rail and/or with the I/O-Module-Type and/or I/O-Module-Address by suitable output means.

Advantageously the Branch-Connection-Modules with their datalink address are visualized on the Controller and/or in a tool by suitable output means (e.g. displays, monitors).

Advantageously the I/O-Modules with their assigned datalink address are visualized on the Controller and/or in a tool by suitable output means.

Advantageously an arrangement comprising suitable processing means (comprising suitable hardware and software), connecting means, storing means is configured to perform the inventive method.

The controller and the Building Automation System comprising suitable processing means, storing means, communication means, I/O means to perform the method steps for addressing and commissioning of I/O-Modules of devices or I/O-Module-devices of a Building Automation System connected by a Single Pair Ethernet (SPE) datalink.

In case the Single Pair Ethernet datalink is a multidrop network, or a multidrop I/O-Bus, especially according to 10BASE-T1S, advantageously the discovering of I/O-Modules is performed based on the topology discovery and/or communication node position detection.

Advantageously to measure the position measurement of the I/O-Modules, the physical interface of the Building Automation Controller sends a specific signal to the physical interface of the I/O-Module which is addressed by the Serial Number SN to trigger the position measurement between the Building Automation Controller and the respective I/O-Module,
wherein a measured propagation delay is queried from the physical interface of the I/O-Module via the Serial Number SN,
wherein the propagation delay is mapped to a cable distance on the I/O-Bus, especially 10BASE-T1S network.

Optionally to determine the sequence of the I/O-Modules on an I/O-Bus the measured position has an accuracy of < 5 cm.

Optionally to determine the sequence of the I/O-Modules on an I/O-Bus the accuracy of the position measurement or the distance measurement is < ½ of the width of an I/O-Module. This increases the quality of the position measurement or the distance measurement. Applying findings of the Nyquist-Shan-non sampling theorem.

Optionally to determine the sequence of the I/O-Modules on an I/O-Bus the measured position has as accuracy the width, especially the physical width, of an I/O-Module.

Method and arrangement for addressing and commissioning of detached I/O-Modules of devices of a Building Automation System connected by a Single Pair Ethernet (SPE) datalink, especially Multidrop Datalink, the Building Automation System comprising one or more Building Automation Controller.

### Reference Signs

- C, C1 - C6: Controller
- IP-B, IP-B1 - IP-B6: IP Backbone
- M, M', M1 - M97: I/O-Module
- M1' - M7', M94' - M97': I/O-Module
- DCC-M, DCC-M1 - DCC-M10: Daisy Chain Connector Module
- BC-M: Branch Connection Module
- BC-M_C, BC-M_C1 - BC-M_C11: Branch Connection Module
- BC-M_C11': Branch Connection Module
- BC-M_N, BC-M_N1 - BC-M_N6: Branch Connection Module
- DL: Logical I/O-Module Address
- CL1 - CL16, CL15', CL16': Connection Link
- CM1 - CM5: Connection Module
- CC1 - CC15, CC15': Control Cabinet
- BS1 - BS16, BS16': Bus Segment
- L: Bus Segment Number
- SS: Standard Switch
- SP1 - SP4: Spoke
- LMAPPM: Logical Modul Addresses Prior Position Measurement
- LMAAPM: Logical Modul Addresses After Position Measurement
- LEM: List of Engineered I/O-Modules
- LDMPPM: List of Discovered I/O-Modules prior to position measurement
- LDMAPMA: List of Discovered I/O-Modules after position measurement and assignment
- MT: I/O-Module Type
- MP: I/O-Module Position
- Pos: Position
- SN: Serial Number
- AS: Assignment
- S1 - S3: Method Step

## Claims

1. A Method for addressing and commissioning of I/O-Modules (M1 - M97) of a Building Automation System,
wherein the Building Automation System comprises a Building Automation Controller (C1 - C6);
wherein the Building Automation System comprises a first group of I/O-Modules (M1 - M16, M21 - M31, M39 - M49, M57 - M67, M76 - M81, M94 - M97) being connected by a first Single Pair Ethernet datalink to the Building Automation Controller (C1 - C5) and to a first Branch-Connection-Module (BC-M_N1 - BC-M_N6);
wherein respective further detached groups of I/O-Modules (M17 - M20, M32 - M35, M36 - M38, M50 - M52, M53 - M56, M68 - M71, M72 - M75, M82 - M85, M86 - M89, M90 - M93) being connected in each case by a respective further Single Pair Ethernet datalink,
wherein the respective further detached groups of I/O-Modules (M17 - M20, M32 - M35, M36 - M38, M50 - M52, M53 - M56, M68 - M71, M72 - M75, M82 - M85, M86 - M89, M90 - M93) have in each case a respective further Branch-Connection-Module (BC-M_C1 - BC-M_C10),
wherein the respective further Branch-Connection-Modules (BC-M_C1 - BC-M_C10) are connected to the first Branch-Connection-Module (BC-M_N1 - BC-M_N3, BC-M_N5, BC-M_N6) or to a Branch-Connection-Module (BC-M_N4) of one of the respective further Single Pair Ethernet datalinks;
wherein the Single Pair Ethernet datalinks are in each case multidrop networks, especially according to the 10BASE-T1S standard;
wherein the first Branch-Connection-Module (BC-M_N1 - BC-M_N3, BC-M_N5, BC-M_N6) and the further Branch-Connection-Modules (BC-M_N4) are inter-connected by suitable IP data link connection (e.g. 100BASE-TX, 10BASE-T1L, WIFI);
wherein Building Automation Controller (C1 - C6) and the further Branch-Connection-Modules (BC-M_C1 - BC-M_C10) are in each case configured as line coordinators for their assigned respective Single Pair Ethernet datalink;
wherein each line coordinator is performing for its assigned respective Single Pair Ethernet datalink:
(S1) discovering I/O-Modules (M1 - M97) on the respective Single Pair Ethernet datalink via node discovery and registration procedure;
(S2) initiating a position measurement with each discovered I/O-Module or I/O-Module (M1 - M97) on the respective Single Pair Ethernet datalink;
(S3) assigning consecutive I/O-Module-Addresses (DL) to the respective I/O-Modules (M1 - M97) of the respective Single Pair Ethernet datalink according to the measured position of the respective I/O-Module (M1 - M97);
wherein the Building Automation Controller (C1 - C6) is assigning a global datalink address (DL) to each discovered I/O-Module (M1 - M97) on the first Single Pair Ethernet datalink,
wherein each of the further Branch-Connection-Modules (BC-M_C1 - BC-M_C10) is assigning a global datalink address (DL) to each discovered I/O-Module of its respective further Single Pair Ethernet datalink.

2. The method according to claim 1, wherein the assigning of a global datalink address (DL) is performed according to the Single Pair Ethernet Network Topology starting with the first Single Pair Ethernet datalink.

3. The method according to claim 1 or claim 2, wherein the global datalink address (DL) is assigned by the Building Automation Controller (C1 - C6) to the Branch Connection Module (BC-M_C1 - BC-M_C10) during commissioning.

4. The method according to one of the preceding claims, wherein the global datalink address is assigned by a commissioning tool (e.g. ABT Go, ABT site) to the respective Branch-Connection-Module (BC-M_C1 - BC-M_C10) during commissioning.

5. The method according to one of the preceding claims, wherein the global datalink address (DL) is assigned by a local user interface of the respective Branch-Connection-Module (BC-M_C1 - BC-M_C10) during commissioning.

6. The method according to one of the preceding claims, wherein the global datalink address (DL) is assigned by a web server of the respective Branch-Connection-Module (BC-M_C1 - BC-M_C10) during commissioning.

7. The Method according to one of the preceding claims, wherein the accuracy of the position measurement is < ½ of the width of an I/O-Module (M1 - Mn) to determine the sequence of the I/O-Modules (M1 - Mn) on the respective Single Pair Ethernet datalink.

8. The Method according to one of the preceding claims, wherein the assigned I/O-Module-Addresses (DL) are be used and mapped to an IPv6 address of the respective Module.

9. The Method according to one of the preceding claims, wherein the I/O-Modules (M1 - M97) are visualized on the Controller (C1 - C6) and/or in a tool by suitable output means.

10. The Method according to one of the preceding claims, wherein the I/O-Modules (M1 - M97) are visualized on the Controller (C) and/or in a tool (CT) with its position on a DIN Rail and/or with the I/O-Module-Type (MT) and/or I/O-Module-Address (MA) by suitable output means.

11. The Method according to one of the preceding claims, wherein the Branch-Connection-Modules with their datalink address (L1 - Ln) are visualized on the Controller (C1 - C6) and/or in a tool by suitable output means.

12. The Method according to one of the preceding claims, wherein the I/O-Modules (M1 - M97) with their assigned datalink address (DL) are visualized on the Controller (C1 - C6) and/or in a tool by suitable output means.

13. An arrangement configured to perform a method according to one of the claims 1 to 12.
